**Europäisches Patentamt**

**European Patent Office**

**Office européen des brevets**

(19)

(11) Veröffentlichungsnummer: **0 256 599 B1**

# EUROPÄISCHE PATENTSCHRIFT

(12)

(45) Veröffentlichungstag der Patentschrift: 26.06.91

(51) Int. Cl.⁵: **B01D 37/00**

(21) Anmeldenummer: **87201507.8**

(22) Anmeldetag: **07.08.87**

(54) **Verfahren zur Entwässerung von feinkörnigen Schlämmen aus Gewässern.**

(30) Priorität: **19.08.86 DE 3628059**

(43) Veröffentlichungstag der Anmeldung:
**24.02.88 Patentblatt 88/08**

(45) Bekanntmachung des Hinweises auf die
Patenterteilung:
**26.06.91 Patentblatt 91/26**

(84) Benannte Vertragsstaaten:
**DE**

(56) Entgegenhaltungen:
**DE-A- 2 360 874**

**H.E. BABBITT: "Sewerage and sewage treatment", Auflage 6, 1947, Seiten 521-529, John Wiley & Sons, Inc., New York, US**

**WATER POLLUTION CONTROL FEDERATION: "Wastewater treatment plant design", 1977, Seiten 151-154,471,472,481-483, W.P.C.F., Washington, US**

**TECHNICAL PRACTICE COMMITTEE: "Sludge dewatering", Manual of Practice Nr. 20, 1969, Seiten 88,94, W.P.C.F., Washington, US**

**R.H. PERRY et al.: "Perry's chemical engine-**

**ers' handbook", Auflage 6, 1984, Seiten 26-45 - 26-47, Mcgraw-Hill Book Co., New York, US**

(73) Patentinhaber: **METALLGESELLSCHAFT AG**
**Reuterweg 14 Postfach 3724**
**W-6000 Frankfurt/M.1(DE)**

(72) Erfinder: **Dittmann, Horst**
**In den Weihern 1**
**W-6470 Büdingen 2(DE)**
Erfinder: **Rosenstock, Friedrich**
**Alt-Bornheim 7-9**
**W-6000 Frankfurt am Main(DE)**

(74) Vertreter: **Rieger, Harald, Dr.**
**Reuterweg 14**
**W-6000 Frankfurt a.M.(DE)**

**Beschreibung**

Die Erfindung betrifft ein Verfahren zur Entwässerung von feinkörnigen Schlämmen aus Gewässern durch mechanische Entwässerung.

Feinkörnige Schlämme aus Gewässern, wie Schlick oder Sedimente aus Hafenbecken, Flüssen und Seen, haben an sich eine für die mechanische Entwässerung günstige Kornverteilung. Ihre Korngröße liegt z.B. etwa unter 0,125 mm. Ihr Wassergehalt liegt bei etwa 70 bis 80 % und muß für eine Weiterverarbeitung gesenkt werden.

Es hat sich jedoch herausgestellt, daß eine direkte mechanische Entwässerung auf eine Feuchtigkeit von ca. 50 % ohne langzeitige Lagerung praktisch nicht möglich ist.

Eine mechanische Entwässerung, z.B. auf Bandfiltern - wie in der DE-OS 31 50 993 beschrieben - führt immer nur zu Feuchtigkeiten, die um etwa 60 Gew.-% liegen. Auch die sonst üblichen Hilfsverfahren, wie die Zugabe von polaren und unpolaren Chemikalien als Filterhilfsmittel, die Aufheizung der Trübe vor dem Filtern oder die Bedampfung des Filterkuchens bei der direkten Filterung, bringen keine entscheidende Verbesserung. Auch die Anwendung hoher Filterdrücke von 30 bar erbrachte ebenfalls keine Verbesserung der Restfeuchte.

Der Erfindung liegt die Aufgabe zugrunde, den Feuchtigkeitsgehalt solcher Schlämme durch mechanische Entwässerung beträchtlich zu senken.

Die Lösung dieser Aufgabe erfolgt erfindungsgemäß dadurch, daß die Schlämme in eine gröbere Fraktion mit einer spezifischen Oberfläche von weniger als 6300 cm$^2$/g und eine feinere Fraktion mit höherer spezifischer Oberfläche getrennt werden, die beiden Fraktionen separat mechanisch entwässert werden und nach der Entwässerung wieder gemischt werden. Wenn sehr grobes Korn im Schlamm vorliegt, wird dieses vorher abgesiebt. Die Trennung erfolgt so, daß die feinere Fraktion in einer Menge von unter 30 Gew.-% anfällt. Der Wassergehalt der feineren Fraktion ist nach der Entwässerung beträchtlich höher als der Wassergehalt der gröberen Fraktion. Die Menge der feineren Fraktion muß also so eingestellt werden, daß nach der Entwässerung in der Mischung der beiden Fraktionen der gewünschte Wassergehalt nicht überschritten wird. Da die Entwässerung der feineren Fraktion schlechter ist als die der gröberen Fraktion, ist es günstiger, die Menge der feineren Fraktion kleinzuhalten, selbst wenn dadurch die Entwässerung der gröberen Fraktion etwas schlechter wird.

Eine vorzugsweise Ausgestaltung besteht darin, daß die spezifische Oberfläche der gröberen Fraktion im Bereich von 2000 bis 5500 cm$^2$/g liegt. Wenn der Trennschnitt in diesem Bereich liegt, ergeben sich besonders gute Entwässerungseigenschaften.

Eine vorzugsweise Ausgestaltung besteht darin, daß die mechanische Entwässerung der gröberen Fraktion auf Druckfiltern bei einem Differenzdruck von 1 bis 6 bar erfolgt. Als Filter können Filter herkömmlicher Bauart verwendet werden, die mit solchen Differenzdrücken arbeiten, wie z.B. Trommel-, Scheiben- oder Bandfilter in Druckkammern oder Filterpressen. Die Verwendung von solchen Filtern bei dem angegebenen Filterdruck führt zu einer guten Entwässerung der gröberen Fraktion.

Eine vorzugsweise Ausgestaltung besteht darin, daß die mechanische Entwässerung der feineren Fraktion in Zentrifugen erfolgt. Die Entwässerung der feineren Fraktion in Zentrifugen führt zu einer relativ guten Entwässerung dieser Fraktion.

Eine vorzugsweise Ausgestaltung besteht darin, daß die Trennung der Schlämme in die gröbere und die feinere Fraktion durch Hydrozyklonierung erfolgt. Auf diese Weise wird eine gute Trennung ohne Zusatz von Hilfsmitteln erzielt.

Eine vorzugsweise Ausgestaltung besteht darin, daß die Trennung der Schlämme in die gröbere und die feinere Fraktion durch Flotation erfolgt. Als Sammlerreagenzien für die feinere Fraktion können Mischungen höherer Alkohole, wie z.B. Octanol, Hexanol und Heptanol, oder Dieselöle oder Ölderivate benutzt werden. Eine Flotation erzielt ebenfalls eine gute Trennung, insbesondere kann der Anteil der feineren Fraktion bei schwierig zu trennenden Schlämmen gesenkt werden.

Die gröbere und die feinere Fraktion werden vor der Filtration oder Flotation eingedickt. Das Eindicken geschieht in der üblichen Weise durch Absetzenlassen und Dekantieren in Eindickern. Zur Verbesserung der Absetzgeschwindigkeit können Flockungsmittel zugesetzt werden. Die feinere Fraktion kann auch durch Entspannungsflotation eingedickt werden.

Eine vorzugsweise Ausgestaltung besteht darin, daß die bei der Hydrozyklonierung anfallende feinere Fraktion durch Flotation getrennt wird, und die gröbere Flotationsfraktion der gröberen Hydrozyklonfraktion zugegeben wird. Die Nachflotation der feineren Fraktion aus der Hydrozyklonierung erfolgt dann, wenn die Menge der bei der Zyklonierung anfallenden feineren Fraktion zu groß ist.

Die Erfindung wird anhand von Beispielen für klassierten Hafenschlick in tabellarischer Form näher erläutert.

Im Beispiel 1 erfolgte die Trennung in einem Hydrozyklon mit einem Einlaufdruck von 1 bis 2,5 bar und einem Wassergehalt von 96 Gew.-%.

Im Beispiel 2 erfolgte die Trennung durch Flotation unter Rühren und Zusatz von 0,1 kg/t Ölderivat als Sammler.

Im Beispiel 3 erfolgte die Trennung zunächst in einem Hydrozyklon, wie im Beispiel 1, und anschließend wurde der Zyklonüberlauf entsprechend Beispiel 2 flotiert.

In allen Fällen erfolgte ein separates Eindicken der feineren und gröberen Fraktion in einem Eindicker vor der Weiterbehandlung der Fraktionen. Die gröbere Fraktion wurde auf einem Trommelfilter bei einem Filterdruck von 4 bar entwässert, und die feinere Fraktion wurde in einer Zentrifuge bei 600 g entwässert.

Alle Prozentangaben sind in Gew.-% gemacht.

Eine Entwässerung des Hafenschlicks ohne vorherige Trennung durch Filtration auf einem Trommelfilter bei einem Filterdruck von 30 bar ergab einen Wassergehalt, der um etwa 60 % lag. Selbst nach einer Zwischenlagerung des Hafenschlicks von 30 Tagen und dieser Filtrierung betrug der Wassergehalt noch über 50 %.

| Beispiel | | 1 | 2 | 3 |
|---|---|---|---|---|
| **frischer Schlick** | | | | |
| Oberfläche | $(cm^2/g)$ | 7500 | 7300 | 8000 |
| Wassergehalt | (%) | 75 | 75 | 75 |
| Korngröße | (mm) | unt.0,125 | unt.0,125 | unt. 0,125 |
| **Trennung** | | | | |
| Aufgabe | (kg)TS | 1000 | 1000 | 1000 |
| gröbere Fraktion | (kg)TS | 751 | 876 | 890 |
| Oberfläche | $(cm^2/g)$ | 5500 | 6040 | 6080 |
| Wassergehalt ca. | (%) | 85 | 90 | 90 |
| feinere Fraktion | (kg)TS | 249 | 124 | 110 |
| Oberfläche | $(cm^2/g)$ | 13270 | 16195 | 23530 |
| Wassergehalt ca. | (%) | >95 | >95 | >95 |

EP 0 256 599 B1

| Beispiel | | 1 | 2 | 3 |
|---|---|---|---|---|
| **Entwässerung** | | | | |
| gröbere Fraktion | (kg) | 1154 | 1448 | 1483 |
| Wassergehalt | (%) | 35 | 39,5 | 40,0 |
| feinere Fraktion | (kg) | 833 | 413 | 366 |
| Wassergehalt | (%) | 70 | 70 | 70 |
| Mischung | (kg) | 1987 | 1861 | 1849 |
| Wassergehalt | (%) | 49,6 | 46,3 | 45,9 |

Die Vorteile der Erfindung bestehen darin, daß der Wassergehalt der Schlämme in relativ einfacher Weise auf Werte gesenkt werden kann, die die Weiterverarbeitung der Schlämme wesentlich erleichtern, und daß diese Entwässerung ohne den Zusatz von Hilfsmitteln in relativ einfacher Weise erfolgen kann.

**Ansprüche**

1. Verfahren zur Entwässerung von feinkörnigen Schlämmen aus Gewässern durch mechanische Entwässerung,

   dadurch gekennzeichnet, daß die Schlämme in eine gröbere Fraktion mit einer spezifischen Oberfläche von weniger als 6300 cm²/g und eine feinere Fraktion mit höherer spezifischer Oberfläche getrennt werden, die beiden Fraktionen separat mechanisch entwässert werden und nach der Entwässerung wieder gemischt werden.

2. Verfahren nach Anspruch 1, dadurch gekennzeichnet, daß die spezifische Oberfläche der gröberen Fraktion im Bereich von 2000 bis 5500 cm²/g liegt.

3. Verfahren nach Anspruch 1 oder 2, dadurch gekennzeichnet, daß die mechanische Entwässerung der gröberen Fraktion auf Druckfiltern bei einem Differenzdruck von 1 bis 6 bar erfolgt.

4. Verfahren nach einem der Ansprüche 1 bis 3, dadurch gekennzeichnet, daß die mechanische Entwässerung der feineren Fraktion in Zentrifugen erfolgt.

5. Verfahren nach einem der Ansprüche 1 bis 4, dadurch gekennzeichnet, daß die Trennung der Schlämme in die gröbere und die feinere Fraktion durch Hydrozyklonierung erfolgt.

6. Verfahren nach einem der Ansprüche 1 bis 4, dadurch gekennzeichnet, daß die Trennung der Schlämme in die gröbere und die feinere Fraktion durch Flotation erfolgt.

7. Verfahren nach Anspruch 5, dadurch gekennzeichnet, daß die bei der Hydrozyklonierung anfallende feinere Fraktion durch Flotation getrennt wird, und die gröbere Flotationsfraktion der gröberen Hydrozyklonfraktion zugegeben wird.

**Claims**

4

1. A process of dewatering fine-grained sludges from bodies of water by mechanical dewatering, characterized in that the sludges are separated into a coarser fraction having a surface area below 6300 cm²/g and a finer fraction having a larger surface area and the two fractions are separately mechanically dewatered and are remixed after they have been dewatered.

2. A process according to claim 1, characterized in that the coarser fraction has a surface area in the range from 2000 to 5500 cm²/g.

3. A process according to claim 1 or 2, characterized in that the coarser fraction is mechanically dewatered on pressure filters under a pressure differential of 1 to 6 bars.

4. A process according to any of claims 1 to 3, characterized in that the finer fraction is mechanically dewatered in centrifuges.

5. A process according to any of claims 1 to 4, characterized in that the sludges are separated into the coarser and finer fractions by hydrocyclone separation.

6. A process according to any of claims 1 to 4, characterized in that the sludges are separated into the coarser and finer fractions by flotation.

7. A process according to claim 5, characterized in that the finer fraction obtained by hydrocyclone separation is separated by flotation and the coarser fraction obtained by flotation is added to the coarser hydrocyclone fraction.

**Revendications**

1. Procédé de déshydratation de bornes à grains fins provenant des eaux par déshydratation mécanique, caractérisé en ce qu'il consiste à séparer les boues en une fraction grossière ayant une surface spécifique inférieure à 6300 cm²/g et en une fraction fine ayant une surface spécifique plus grande, à déshydrater mécaniquement les deux fractions séparément et à les remélanger après la déshydratation.

2. Procédé suivant la revendication 1, caractérisé en ce que la surface spécifique de la fraction grossière est comprise entre 2000 et 5500 cm²/g.

3. Procédé suivant la revendication 1 ou 2, caractérisé en ce qu'il consiste à effectuer la déshydratation mécanique de la fraction grossière sur des filtres-presses avec une différence de pression de 1 à 6 bar.

4. Procédé suivant l'une des revendications 1 à 3, caractérisé en ce qu'il consiste à effectuer la déshydratation mécanique de la fraction fine dans des centrifugeuses.

5. Procédé suivant l'une des revendications 1 à 4, caractérisé en ce qu'il consiste à effectuer la séparation des boues en la fraction grossière et en la fraction fine par passage dans un hydrocyclone.

6. Procédé suivant l'une des revendications 1 à 4, caractérisé en ce qu'il consiste à effectuer la séparation des boues en la fraction grossière et en la fraction fine par flottation.

7. Procédé suivant la revendication 5, caractérisé en ce qu'il consiste à séparer par flottation la fraction fine se formant lors du passage sur hydrocyclone et à ajouter la fraction grossière de flottation à la fraction grossière de l'hydrocyclone.